# EUROPÄISCHE PATENTANMELDUNG

(11) **EP 3 026 382 A1**
(43) Veröffentlichungstag der Anmeldung: **01.06.2016**
(21) Anmeldenummer: 15195591.1
(22) Anmeldetag: 20.11.2015
(51) Int. Cl.: F26B 9/06, F26B 21/00, F26B 21/08

(54) **TROCKNUNGSVORRICHTUNG**

(30) Priorität: 21.11.2014 AT 8442014
(71) Anmelder: Wienerberger AG, 1100 Wien (AT)
(72) Erfinder: Rath, Johannes, 2340 Mödling (AT)
(74) Vertreter: Gibler & Poth Patentanwälte KG

(57) **Zusammenfassung**

Bei einer Trocknungsvorrichtung (1) zum Trocknen von Trocknungsgut (2) umfassend einen Trocknungsraum (3) zur Aufnahme des Trocknungsgutes (2) und wenigstens ein Gebläse (4) zum Erzeugen eines Luftstromes durch das Trocknungsgut (2), wird vorgeschlagen, dass das Gebläse (4) zwischen einem Durchluftbetrieb, in welchem das Gebläse (4) die Luft zu mindestens 75% des Gebläsedurchsatzes von außerhalb des Trocknungsraumes (3) ansaugt, und einem Umluftbetrieb, in welchem das Gebläse (4) die Luft zu mindestens 75% des Gebläsedurchsatzes aus dem Trocknungsraum (3) ansaugt, umschaltbar ist.

## Beschreibung

Die Erfindung betrifft eine Trocknungsvorrichtung zum Trocknen von Trocknungsgut gemäß dem Oberbegriff des Patentanspruches 1.

Es ist bekannt feuchte oder nasse Trocknungsgüter, beispielsweise Ziegel, bei deren Herstellung in einer Trocknungsvorrichtung, beispielsweise einem Kammertrockner, durch Zuführung heißer Trocknungsluft zu trocknen. Nachteilig an dieser Art der Ziegeltrocknung ist der hohe notwendige Energieaufwand zur Erzeugung der heißen Trocknungsluft. Die Wärme zur Erzeugung der heißen Trocknungsluft kann zwar zum Teil von den verwendeten Brennöfen gewonnen werden, allerdings ist weiterhin eine zusätzliche Wärmezufuhr notwendig, da die Abwärme von den Brennöfen generell nicht für den gesamten Trocknungsprozess ausreicht.

Aufgabe der Erfindung ist es daher eine Trocknungsvorrichtung der eingangs genannten Art anzugeben, mit welcher die genannten Nachteile vermieden werden können, mit welcher eine Trocknung von Trocknungsgütern schnell und energiesparend erfolgen kann.

Erfindungsgemäß wird dies durch die Merkmale des Patentanspruches 1 erreicht.

Dadurch ergibt sich der Vorteil, dass durch die Trocknungsvorrichtung der Trocknungsprozess vergleichsweise schnell und mit einer guten Energieeffizienz erfolgen kann. Hierbei hat sich gezeigt, dass gerade bei sehr feuchten Trocknungsgütern die Trocknung im Durchluftbetrieb mit Umgebungsluft sehr gut erfolgt, wobei allerdings bei einem geringen Feuchtigkeitsgrad der Trocknungsgüter die unbeheizte Umgebungsluft nur noch sehr wenig Feuchtigkeit aufnimmt, wodurch der Trocknungsprozess sehr lange dauern würde. Bei einem geringen Feuchtigkeitsgrad der Trocknungsgüter erfolgt der Trocknungsprozess im Umluftbetrieb mit beheizter Luft wesentlich schneller als im Durchluftbetrieb mit Umgebungsluft. Durch das zwischen dem Durchluftbetrieb und dem Umluftbetrieb umschaltbare Gebläse kann daher die Trocknung einfach zunächst im Durchluftbetrieb erfolgen, wobei nach Erreichen eines vorgebbaren Kriteriums auf einen Umluftbetrieb mit Heißluftzufuhr gewechselt werden kann. Dieser Wechsel kann in vorteilhafter Weise im selben Trocknungsraum erfolgen.

Weiters betrifft die Erfindung ein Verfahren zum Trocknen eines Trocknungsgutes gemäß dem Patentanspruch 11.

Aufgabe der Erfindung ist es daher weiters ein Verfahren zum Trocknen eines Trocknungsgutes anzugeben, mit welchem die genannten Nachteile vermieden werden können, mit welcher eine Trocknung von Trocknungsgütern schnell und energiesparend erfolgen kann.

Erfindungsgemäß wird dies durch die Merkmale des Patentanspruches 11 erreicht.

Die Vorteile des Verfahrens entsprechen den vorstehenden Vorteilen der Trocknungsvorrichtung.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen ledigliche eine bevorzugte Ausführungsform beispielhaft dargestellt ist, näher beschrieben. Dabei zeigt:
Fig. 1 eine bevorzugte Ausführungsform der Trocknungsvorrichtung als schematische Darstellung im Durchluftbetrieb;
Fig. 2 die bevorzugte Ausführungsform der Trocknungsvorrichtung als schematische Darstellung im Umluftbetrieb;
Fig. 3 bis 5 ein Detail der bevorzugten Ausführungsform der Trocknungsvorrichtung in drei verschiedenen Stellungen; und
Fig. 6 Teile des Gebläses der bevorzugten Ausführungsform der Trocknungsvorrichtung.

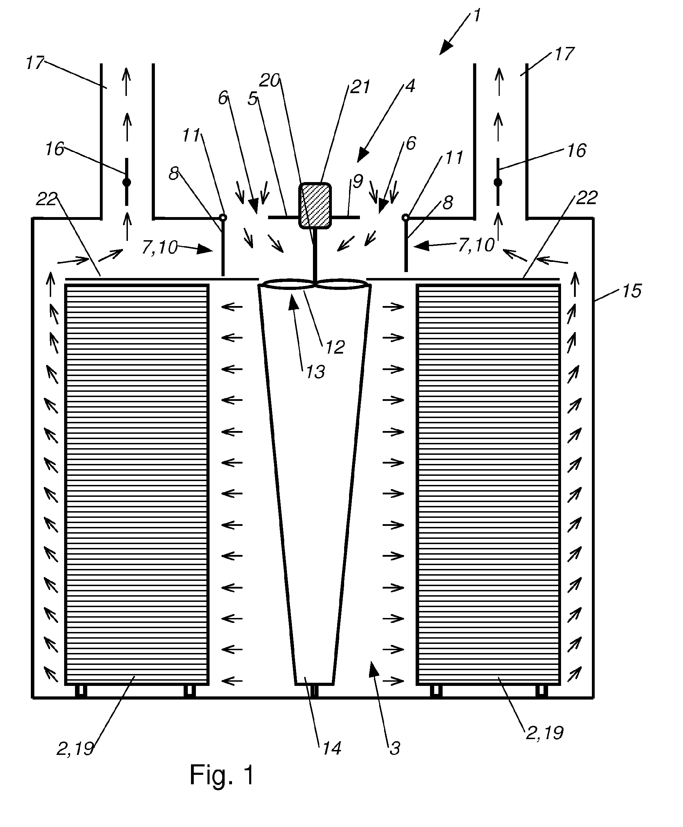

Die Fig. 1 bis 6 zeigen zumindest Teile einer Trocknungsvorrichtung 1 zum Trocknen von Trocknungsgut 2 umfassend einen Trocknungsraum 3 zur Aufnahme des Trocknungsgutes 2 und wenigstens ein Gebläse 4 zum Erzeugen eines Luftstromes durch das Trocknungsgut 2.

Die Trocknungsvorrichtung 1 ist zum Trocknen eines feuchten Trocknungsgutes 2 vorgesehen. Das Trocknungsgut 2 können besonders bevorzugt Ziegelrohlinge sein. Vor dem Brennen der Ziegelrohlinge ist es erforderlich das in diesen gebundene Wasser weitestgehend aus den Ziegelrohlingen zu entfernen. Die Ziegelrohlinge können weiters Rohlinge für Lehmziegel sein, bei welchen ein nachträgliches Brennen nicht vorgesehen ist.

Zum Trocknen ist das Trocknungsgut 2 in einem Trocknungsraum 3 angeordnet.

Das Trocknungsgut 2 kann insbesondere in einem Trockengestell 19 derart angeordnet sein, dass eine Durchströmung bzw. Umströmung im Wesentlichen jedes einzelnen Stückes des Trocknungsgutes 2 mit Luft möglich ist. Das Trockengestell 19 kann insbesondere mehrstöckig ausgebildet sein.

Das Trockengestell 19 kann bevorzugt beweglich ausgebildet sein, und insbesondere Räder an der Unterseite aufweisen.

Alternativ kann das Trockengestell 19 fest im Trocknungsraum 3 angeordnet sein.

Die Trocknungsvorrichtung 1 weist ein Gebläse 4 auf, um einen Luftstrom durch das Trocknungsgut 2 zu erzwingen, wodurch die Trocknung wesentlich beschleunigt wird. Hierbei bedeutet der Luftstrom durch das Trocknungsgut 2, dass der Luftstrom die einzelnen Stücke des Trocknungsgutes 2 umströmt, und gegebenenfalls auch durchströmt, beispielsweise bei Rohlingen für Lochziegel. Das Gebläse 4 kann auch als Belüftungseinrichtung oder Zwangsbelüftungseinrichtung bezeichnet werden. Insbesondere kann vorgesehen sein, dass der Luftstrom von einer Seite des Trockengestells 19 zu einer anderen Seite des Trockengestells 19 strömt. Die Luftströmung ist in den Fig. 1, 2 und 6 durch Pfeile angedeutet.

Vorgesehen ist, dass das Gebläse 4 zwischen einem Durchluftbetrieb, in welchem das Gebläse 4 die Luft zu mindestens 75% des Gebläsedurchsatzes von außerhalb des Trocknungsraumes 3 ansaugt, und einem Umluftbetrieb, in welchem das Gebläse 4 die Luft zu mindestens 75% des Gebläsedurchsatzes aus dem Trocknungsraum 3 ansaugt, umschaltbar ist. Das Gebläse 4 kann hierbei zwischen mindestens zwei Betriebsarten umgeschaltet werden, wobei die erste Betriebsart der Durchluftbetrieb ist, und die zweite Betriebsart der Umluftbetrieb ist. Der Gebläsedurchsatz bezeichnet den Durchsatz des Gebläses, insbesondere in Volumen pro Zeiteinheit, besonders bevorzugt als m³/h.

In dem Durchluftbetrieb saugt das Gebläse 4 die Luft zu mindestens 75% des Gebläsedurchsatzes, also vorwiegend, von außerhalb des Trocknungsraumes 3 an, wobei bevorzugt maximal 25% des Gebläsedurchsatzes der Luft aus dem Trocknungsraum 3 angesaugt werden.

Hierbei kann im Durchluftbetrieb vorgesehen sein, dass die Luft mittels des Gebläses 4 von einem ersten Bereich des Trocknungsraumes 3 durch das Trockengestell 19 zu einem zweiten Bereich des Trocknungsraumes 3 geblasen wird, und dass maximal 25% der Luft aus dem zweiten Bereich in dem Trocknungsraum 3 wieder zu dem ersten Bereich geführt werden.

Es kann die von außerhalb des Trocknungsraumes 3 angesaugte Luft insbesondere im Wesentlichen unbehandelte Umgebungs- oder Außenluft sein. Der Rest der Luft im Durchluftbetrieb kann von innerhalb des Trocknungsraumes 3 angesaugt werden. Die im Durchluftbetrieb betriebene Trocknungsvorrichtung 1 gemäß der bevorzugten Ausführungsform ist in Fig. 1 dargestellt.

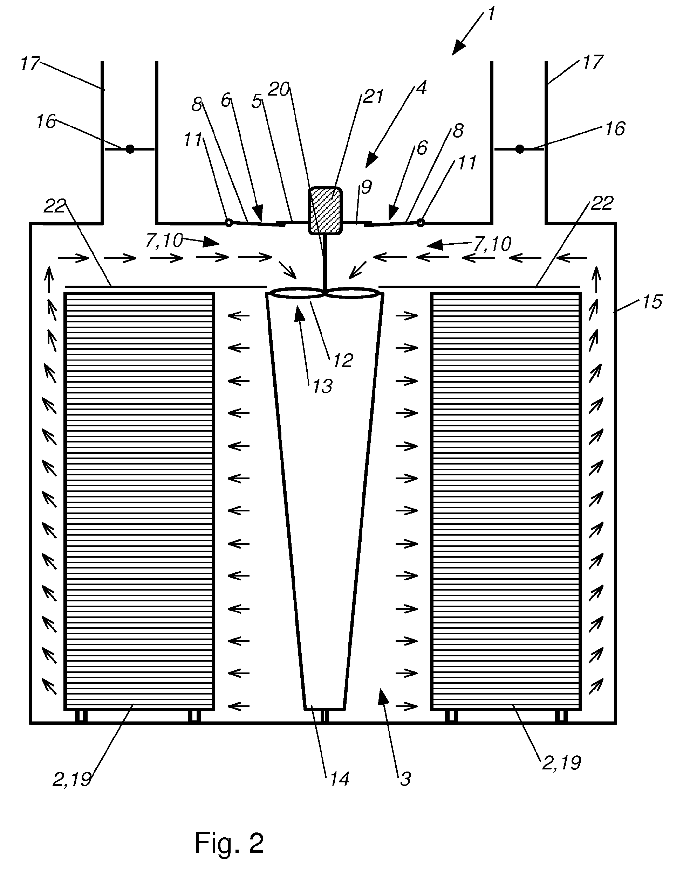

In dem Umluftbetrieb saugt das Gebläse 4 die Luft zu mindestens 75%, also vorwiegend, aus dem Trocknungsraum 3 an, wobei bevorzugt maximal 25% der Luft von außerhalb des Trocknungsraumes 3 angesaugt werden. Hierbei kann im Umluftbetrieb vorgesehen sein, dass die Luft mittels des Gebläses 4 von dem ersten Bereich durch das Trockengestell 19 zu dem zweiten Bereich geblasen wird, und dass mindestens 75% der Luft aus dem zweiten Bereich in dem Trocknungsraum 3 wieder zu dem ersten Bereich geführt werden. Hierbei kann insbesondere die derart im Trocknungsraumes 3 zirkulierende Luft eine aufgeheizte Luft sein, welche bevorzugt durch Abwärme eines Brennofens beheizt wird, aber auch zusätzlich durch einen eigenen Brenner aufgeheizt sein kann. Der Rest der Luft im Umluftbetrieb kann von außerhalb des Trocknungsraumes 3 angesaugt werden, um eine gewisse Erneuerung der Luft zu gewährleisten und verbrauchte Luft abzugeben. Die im Umluftbetrieb betriebene Trocknungsvorrichtung 1 gemäß der bevorzugten Ausführungsform ist in Fig. 2 dargestellt.

Dadurch ergibt sich der Vorteil, dass durch die Trocknungsvorrichtung 1 der Trocknungsprozess vergleichsweise schnell und mit einer guten Energieeffizienz erfolgen kann. Hierbei hat sich gezeigt, dass gerade bei sehr feuchten Trocknungsgütern 2 die Trocknung im Durchluftbetrieb mit Umgebungsluft sehr gut erfolgt, wobei allerdings bei einem geringen Feuchtigkeitsgrad der Trocknungsgüter 2 die unbeheizte Umgebungsluft nur noch sehr wenig Feuchtigkeit aufnimmt, wodurch der Trocknungsprozess sehr lange dauern würde. Bei einem geringen Feuchtigkeitsgrad der Trocknungsgüter 2 erfolgt der Trocknungsprozess im Umluftbetrieb mit beheizter Luft wesentlich schneller als im Durchluftbetrieb mit Umgebungsluft. Durch das zwischen dem Durchluftbetrieb und dem Umluftbetrieb umschaltbare Gebläse 4 kann daher die Trocknung einfach zunächst im Durchluftbetrieb erfolgen, wobei nach Erreichen eines vorgebbaren Kriteriums auf einen Umluftbetrieb mit Heißluftzufuhr gewechselt werden kann. Dieser Wechsel kann in vorteilhafter Weise im selben Trocknungsraum 3 erfolgen.

Weiters ist ein Verfahren zum Trocknen eines Trocknungsgutes 2 in einem Trocknungsraum 3 einer Trocknungsvorrichtung 1 vorgesehen, wobei das Trocknungsgut 2 mittels des durch das Gebläse 4 erzeugten Luftstromes getrocknet wird, wobei in einem Durchlufttrocknungschritt die durch das Gebläse 4 strömende Luft zu mindestens 75% von außerhalb des Trocknungsraumes 3 angesaugt wird, wobei nach dem Durchlufttrocknungschritt in einem Umlufttrocknungsschritt die durch das Gebläse 4 strömende Luft zu mindestens 75% aus dem Trocknungsraum 3 angesaugt wird. Der Durchlufttrocknungschritt erfolgt im Durchluftbetrieb der Trocknungsvorrichtung 1, während der Umlufttrocknungsschritt im Umluftbetrieb der Trocknungsvorrichtung 1 erfolgt. Das Verfahren zum Trocknen des Trocknungsgutes 2 kann auch als Trocknungsprozess bezeichnet werden.

Besonders bevorzugt kann vorgesehen sein, dass das Gebläse 4 im Durchluftbetrieb, die Luft zu mindestens 85% des Gebläsedurchsatzes, besonders bevorzugt zu mindestens 90% des Gebläsedurchsatzes, von außerhalb des Trocknungsraumes 3 ansaugt.

Weiters kann bevorzugt vorgesehen sein, dass das Gebläse 4 im Umluftbetrieb die Luft zu mindestens 85% des Gebläsedurchsatzes, besonders bevorzugt zu mindestens 90% des Gebläsedurchsatzes, aus dem Trocknungsraum 3 ansaugt.

Weiters kann vorgesehen sein, dass das Gebläse 4 eine Umschaltvorrichtung aufweist, mit welcher das Gebläse 4 zwischen dem Durchluftbetrieb und dem Umluftbetrieb umgeschaltet werden kann.

Bei dem Verfahren kann insbesondere vorgesehen sein, dass das Gebläse 4 beim Erreichen eines vorgebbaren Kriteriums zwischen dem Durchluftbetrieb und dem Umluftbetrieb umgeschaltet wird. Das vorgebbare Kriterium kann insbesondere mit einem Feuchtigkeitsgrad des Trocknungsgutes 2 zumindest mittelbar in Zusammenhang stehen.

Das vorgebbare Kriterium kann insbesondere eine vorgebbare Zeitdauer sein. Hierbei kann durch Erfahrungswerte und/oder Versuchsreihen die vorgebbare Zeitdauer bestimmt werden. Hierbei kann angenommen werden, dass das Trocknungsgutes 2 nach einer vorgegebenen Zeitdauer im Durchluftbetrieb ausreichend getrocknet wurde, um das Gebläse 4 in den Umluftbetrieb umzuschalten.

Weiters kann vorgesehen sein, dass eine relative Feuchtigkeit in der Abluft gemessen wird und/oder der Feuchtigkeitsgrad des Trocknungsgutes mittels Sonden direkt bestimmt wird. Das vorgebbare Kriterium kann hierbei ein vorgebbarer Messwert eines entsprechenden Messinstrumentes sein.

Das Gebläse 4 benötigt zu seinem Betrieb Energie, welche üblicherweise von Außen zugeführt wird. Diese Energie wird zum Erzeugen des Luftstromes durch das Gebläse 4 aufgewandt, und kann naturgemäß durch Reibung im Trocknungsraum 3 teilweise in Wärmeenergie umgewandelt werden. Diese zum Betreiben des Gebläses 4 aufgewandte Energie kann insbesondere als Betriebsexergie der Trocknungsvorrichtung 1 bezeichnet werden. Die Betriebsexergie bezeichnet daher jene Exergie, welche vorgesehen ist in dem Trocknungsraum 3 mechanische oder elektrische Arbeit, beispielsweise Beleuchtung, zu verrichten, und welche lediglich als nicht verhinderbare Abwärme dem Trocknungsraum 3 als Wärmeenergie zugeführt wird, wobei die diese Abwärme allerdings lediglich einen sehr geringen Betrag ausmacht. Die Betriebsexergie trägt zu einer Temperaturerhöhung im Trocknungsraum 3 im Wesentlichen wenig bei.

Exergie ist die frei nutzbare Energie, also derjenige Anteil der Energie, der sich unbeschränkt in jede andere Energieform umwandeln lässt. Dagegen wird Energie, welche nicht Exergie und daher nicht in jede andere Energieform umgewandelt werden kann, als Anergie bezeichnet.

Die Betriebsexergie kann auch andere Formen der Energiezuführung beinhalten, beispielsweise elektrische Energie für eine in dem Trocknungsraum 3 angeordneten Beleuchtung.

Besonders bevorzugt kann vorgesehen sein, dass in dem Umlufttrocknungsschritt dem Trocknungsraum 3 eine zusätzliche Exergie von außerhalb des Trocknungsraumes 3 zugeführt wird. Die zusätzliche Exergie ist hierbei eine dem Trocknungsraum 3 zugeführte frei nutzbare Energie, welche über die Betriebsexergie hinausgeht. Die zusätzliche Exergie kann hierbei eine Energie sein, welche dem Trocknungsraum 3 als Wärmeenergie direkt zugeführt wird oder im Trocknungsraum 3 zu Wärmeenergie gewandelt werden kann, und über die zum Betrieb der Einrichtungen des Trocknungsraumes 3 verwendete Energie, also der Betriebsexergie, hinausgeht. Die zusätzliche Exergie ist hierbei dazu vorgesehen, das Trocknungsgut 2 zu erhitzen und daher die zur Verdampfung der Feuchtigkeit benötigte Energie bereit zu stellen.

Die zusätzliche Exergie kann insbesondere durch die Zuführung von Luft bereitgestellt werden, wobei die Temperatur der Luft über der Umgebungstemperatur liegt. Die zusätzliche Exergie ist in diesem Falle die Wärmeenergie dieser zugeführten Luft, welche über die Wärmeenergie der Luft bei der Umgebungstemperatur hinausgeht.

Weiters kann die zusätzliche Exergie insbesondere durch eine Heizvorrichtung in dem Trocknungsraum 3 bereitgestellt werden. Hierbei kann die zusätzliche Exergie die elektrische und/oder chemische Energie sein, welche der Heizvorrichtung zugeführt wird.

Es kann vorgesehen sein, dass dem Trocknungsraum 3 im Umluftbetrieb Luft von außerhalb des Trocknungsraumes 3 zu mindestens 2%, insbesondere mindestens 5%, besonders bevorzugt mindestens 15%, des Gebläsedurchsatzes zugeführt, insbesondere durch das Gebläse 4 angesaugt wird. Hierbei kann die zusätzliche Exergie insbesondere als über die Wärmeenergie der Umgebungstemperatur hinausgehende Wärmeenergie der zugeführten Luft ausgebildet sein.

Insbesondere kann vorgesehen sein, dass in dem Umlufttrocknungsschritt dem Trocknungsraum 3 eine zusätzliche Wärmeenergie durch Luft von außerhalb des Trocknungsraumes 3 zugeführt wird. Die zusätzliche Wärmeenergie ist hierbei die Wärmeenergie der zugeführten Luft, welche über die Wärmeenergie der Luft bei der Umgebungstemperatur hinausgeht. Diese zusätzliche Wärmeenergie entspricht daher der zusätzlichen Exergie in Form von Wärmeenergie.

Bevorzugt kann ein Ziegelwerk vorgesehen sein, welches wenigstens eine Trocknungsvorrichtung 1 und einen Brennofen für das Trocknungsgut 2 aufweist. Eine Luftzuführung der Trocknungsvorrichtung 1 kann insbesondere mit dem Brennofen wirkverbunden sein, um eine Abwärme des Brennofens zur Beheizung der Luft zu verwenden. Hierbei kann insbesondere vorgesehen sein, dass die Luftzuführung über einen Wärmetauscher mit dem Brennofen wirkverbunden ist.

Die Trocknungsvorrichtung 1 kann insbesondere als Kammertrockner ausgebildet sein. Ein Kammertrockner weist wenigstens eine Trocknungskammer 15 auf, in welche vor dem Trocknungsprozess das Trocknungsgut 2 eingebracht wird. Der Trocknungsprozess wird in der Trocknungskammer 15 durchgeführt.

Insbesondere kann eine Trocknungsvorrichtung 1 vorgesehen sein, welche mehrere Trocknungskammern 15 umfasst. Dadurch kann die Abwärme eines Brennofens immer für einen Teil der Trocknungskammern 15 bereit stehen, welche gerade im Umluftbetrieb sind, während der andere Teil im Durchluftbetrieb Umgebungsluft verwendet.

Die Trocknungsvorrichtung 1 kann auch als Tunneltrockner ausgebildet werden. Hierbei wird das Trocknungsgut 2 durch den Trocknungsraum 3 während des Trocknungsprozesses befördert. Der Trocknungsraum 3 kann hierbei an beiden Enden offen sein.

Insbesondere kann eine Trocknungsanlage vorgesehen sein, welche als Tunneltrockner ausgebildet ist, wobei zumindest ein Teil der Trocknungsanlage als die Trocknungsvorrichtung 1 mit dem umschaltbaren Gebläse 4 ausgebildet ist. Beispielsweise kann der gesamte Tunneltrockner umschaltbare Gebläse 4 aufweisen.

Besonders bevorzugt kann vorgesehen sein, dass der Tunneltrockner mehrere Zonen aufweist, wobei zumindest eine Zone als Trocknungsvorrichtung 1 mit umschaltbaren Gebläse 4 ausgebildet ist. Hierbei kann insbesondere am Anfang des Tunneltrockners eine Durchlufttrocknungsvorrichtung und am Ende des Tunneltrockners eine Umlufttrocknungsvorrichtung vorgesehen sein. Zwischen dem Anfang und dem Ende des Tunneltrockners kann dann eine Trocknungsvorrichtung 1 mit umschaltbaren Gebläse 4 vorgesehen sein, wobei besonders bevorzugt je nach Wetterlage, also Temperatur und Luftfeuchtigkeit der Umgebungstemperatur, die Mitte des Tunneltrockners im Durchluftbetrieb oder im Umluftbetrieb betrieben werden kann.

Bevorzugt kann vorgesehen sein, dass die durch das Gebläse 4 strömende Luft im Durchlufttrocknungschritt eine Temperatur im Bereich einer Umgebungslufttemperatur, insbesondere zwischen 10°C und 40°C, aufweist. Diese Temperatur kann insbesondere im Bereich des Ventilators 12 des Gebläses 4 gemessen werden. Die im Durchlufttrocknungschritt verwendete Luft kann daher größtenteils der Umgebung der Trocknungsvorrichtung 1 entstammen. Es kann aber durchaus vorgesehen sein, dass ein geringer Teil dieser Luft auch vorbeheizt ist.

Weiters kann vorgesehen sein, dass die durch das Gebläse 4 strömende Luft im Umlufttrocknungsschritt eine Temperatur von höher als eine Umgebungslufttemperatur, insbesondere bis zu 120°C, aufweist. Diese Temperatur kann insbesondere im Bereich des Ventilators 12 des Gebläses 4 gemessen werden. Die Luft im Umlufttrocknungsschritt kann hierbei vorgeheizt werden, insbesondere durch die Abwärme eines Brennofens und/oder durch einen eigenen Brenner.

Besonders bevorzugt kann vorgesehen sein, dass die Temperatur der Luft in dem Trocknungsraum 3 im Umlufttrocknungsschritt zunächst stetig zunimmt. Hierbei kann vorgesehen sein, dass die Temperatur der Luft in dem Trocknungsraum 3 am Anfang des Umlufttrocknungsschrittes zunächst auf Umgebungstemperatur ist, und bevorzugt erst durch die Zuführung heißer Luft von außerhalb des Trocknungsraumes 3 die Temperatur der Luft in dem Trocknungsraum 3 erhöht wird.

Bevorzugt kann vorgesehen sein, dass im Umluftbetrieb die von außerhalb des Trocknungsraumes 3 ansaugte Luft eine Temperatur von mindestens 100°C bevorzugt mindestens 120°C, aufweist.

Besonders bevorzugt kann vorgesehen sein, dass der Volumenstrom der von außerhalb des Trocknungsraumes 3 angesaugten Luft in dem

Durchlufttrocknungschritt mindestens drei mal, insbesondere mindestens fünfzehn mal, so hoch ist wie im Umlufttrocknungsschritt. Der Volumenstrom ist hierbei der durch das Gebläse 4 von außerhalb des Trocknungsraumes 3 angesaugte Volumenstrom an Luft, welches in m³/h gemessen wird.

Insbesondere kann vorgesehen sein, dass der Gebläsedurchsatz im Durchlufttrocknungschritt verschieden ist zum Gebläsedurchsatz im Umlufttrocknungsschritt.

Bevorzugt kann vorgesehen sein, dass das Gebläse 4 einen Ventilator 12 aufweist, welcher die Luft in eine Luftverteileinrichtung 14 mit wenigstens einem Luftschlitz 18 bläst. Der Ventilator 12 kann bevorzugt ein Axialventilator sein.

Die Luftverteileinrichtung 14 kann insbesondere ein Luftverteilungsrohr, bevorzugt ein Trichter, sein.

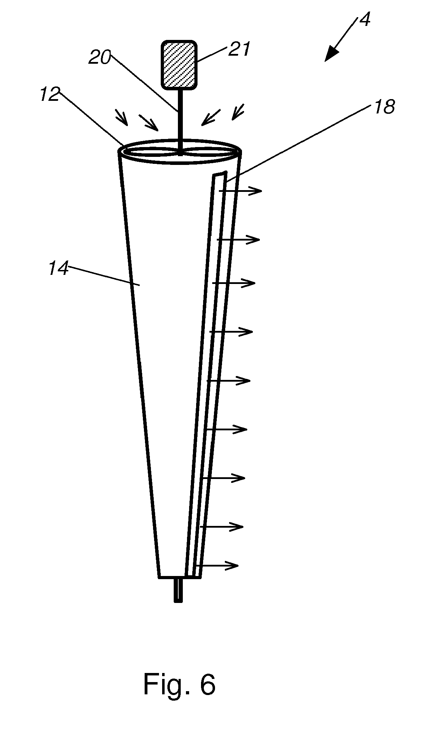

Die Luftverteileinrichtung 14 kann sich insbesondere vom Ventilator 12 weg verjüngen. Die Luftverteileinrichtung 14 kann weiters drehbar sein. Durch diese Kombination aus Ventilator 12 und Luftverteileinrichtung 14 kann eine starke Luftströmung im Bereich des Trocknungsgutes 2 erreicht werden, wobei sich die Luftmassen gut verwirbeln. Ein derartiges Gebläse 4 ist in der Fig. 6 dargestellt.

Weiters kann vorgesehen sein, dass der Ventilator 12 mittels einer Welle 20 mit einem Motor 21 wirkverbunden ist.

Bevorzugt kann vorgesehen sein, dass eine Mehrzahl an Gebläsen 4 vorgesehen ist. Die Gebläse 4 können insbesondere in wenigstens einer Reihe angeordnet sein, wobei an wenigstens einer Seite, bevorzugt beiden Seiten, dieser Reihe an Gebläsen 4 die Trocknungsgüter 2 angeordnet sind.

Beispielsweise zeigt die bevorzugte Ausführungsform in den Fig. 1 und 2 eine mittige Reihe an Gebläsen 4, wobei an beiden Seiten der Reihe an Gebläsen 4 jeweils eine Reihe an Trockengestellen 19 angeordnet sind. In Fig. 1 und 2 verlaufen die Reihen normal zur Bildebene.

Es können weiters eine Vielzahl an Reihen an Gebläsen 4 vorgesehen sein.

Das Gebläse 4 bewirkt unter anderem eine Bewegung der Luft in dem Trocknungsraum 3. Um die Trocknung der Trocknungsgüter 2 zu unterstützen kann es vorteilhaft sein, eine Führung für die Luft im Trocknungsraum 3 anzuordnen, damit ein großer Teil der Luftströmung durch die Trockengestelle 19 führt.

Insbesondere kann eine Führung der Luft durch die Trockengestelle 19 erreicht werden sein, beispielsweise wenn diese mehrere Etagen aufweisen und dadurch eine waagrechte Luftströmung durch die Trockengestelle 19 erzwingen.

Bevorzugt kann vorgesehen sein, dass im Trocknungsraum 3 wenigstens ein Leitblech 22 angeordnet ist. Das Leitblech 22 kann insbesondere oberhalb der Trocknungsgestelle 19 waagrecht angeordnet sein.

Besonders bevorzugt kann vorgesehen sein, dass das Gebläse 4 eine Ansaugkammer 5 mit wenigstens einer außerhalb des Trocknungsraumes 3 führenden Außenansaugöffnung 6 und wenigstens einer in den Trocknungsraum 3 führenden Innenansaugöffnung 7 aufweist. Hierbei erfolgt die Ansaugung für das Gebläse 4 durch die Ansaugkammer 5. Durch diese Ansaugkammer 5 kann das Gebläse 4 einfach zwischen dem Durchluftbetrieb und dem Umluftbetrieb umgeschaltet werden, wobei im Durchluftbetrieb die Ansaugkammer 5 die Ansaugung des Gebläses 4 im Wesentlichen auf die Außenansaugöffnung 6 schaltet, und im Umluftbetrieb die Ansaugung des Gebläses 4 im Wesentlichen auf die Innenansaugöffnung 7 schaltet. Die Außenansaugöffnung 6 und die Innenansaugöffnung 7 können insbesondere verschließbar sein. Durch die Ansaugkammer 5 kann das Gebläse 4 einfach zwischen einem Durchluftbetrieb und einem Umluftbetrieb umgeschaltet werden. Hierbei ergibt sich insbesondere der Vorteil, dass ein bestehendes Gebläse 4 mittels der Ansaugkammer 5 einfach in ein umschaltbares Gebläse 5 aufgerüstet werden kann, wobei die Umbauarbeiten an bereits bestehenden und herkömmlich ausgebildeten Trocknungsvorrichtungen 1 gering gehalten werden können.

Besonders bevorzugt kann vorgesehen sein, dass das Gebläse 4 eine an der Ansaugkammer 5 angrenzende, insbesondere, drehbare Luftverteileinrichtung 14 mit wenigstens einem Luftschlitz 18 aufweist. Die Ansaugkammer 5 kann hierbei insbesondere an eine bestehende Luftverteileinrichtung 14 eines Gebläses 4 angebaut werden.

Weiters kann vorgesehen sein, dass der Trocknungsraum 3 wenigstens eine, durch ein Ausblasabsperrorgan 16 verschließbare, Ausblasöffnung 17 aufweist. Das Ausblasabsperrorgan 16 kann insbesondere dazu ausgebildet sein, denn Luftstrom durch die Ausblasöffnung 17 vorgebbar zu verringern, wobei bevorzugt auch im Umluftbetrieb die Ausblasöffnung 17 nicht vollständig verschlossen ist. Das Ausblasabsperrorgan 16 kann insbesondere als Absperrklappe ausgebildet sein. Durch die Ausblasöffnung 17 kann im Durchluftbetrieb der Trocknungsvorrichtung 1 die durchgeblasene und nicht rückzirkulierende Luft den Trocknungsraum 3 einfach verlassen. In Kombination mit dem umschaltbaren Gebläse 4 kann durch die verschließbare Ausblasöffnung 17 die Effizienz der Trocknungsvorrichtung 1 gesteigert werden, da die Luftströmung besser kontrollierbar wird.

Hierbei kann die Trocknungsvorrichtung 1 durch das Ausblasabsperrorgan 16 bereits in gewissen Maßen zwischen Durchluftbetrieb und Umluftbetrieb umgeschaltet werden, da bei geschlossenem Ausblasabsperrorgan 16 das Gebläse 4 die Luft lediglich in Umluft führen kann.

Insbesondere kann vorgesehen sein, dass das Gebläse 4 vorgesehen ist Luft von einem ersten Bereich des Trocknungsraumes 3 durch das Trocknungsgut 2 zu einem zweiten Bereich zu führen, dass ein Umluftkanal zwischen dem ersten Bereich und den zweiten Bereich zum Erreichen eines geschlossenen Umluftkreislaufes der Luft vorgesehen ist, dass eine Ansaugöffnung, insbesondere die Außenansaugöffnung 6, von außerhalb des Trocknungsraumes 3 in den ersten Bereich führt, dass eine Ausblasöffnung 17 von außerhalb der Trocknungsraumes 3 in den zweiten Bereich führt, und dass eine Luftströmung durch den Umluftkanal, die Ansaugöffnung und die Ausblasöffnung 17 durch eine Umschalteinrichtung vorgebbar verringerbar ist.

Weiters kann vorgesehen sein, dass das Gebläse 4 wenigstens eine Umschaltklappe 8 aufweist, dass die wenigstens eine Umschaltklappe 8 in dem Durchluftbetrieb die wenigstens eine Innenansaugöffnung 7 zumindest teilweise abdeckt, und dass die wenigstens eine Umschaltklappe 8 in dem Umluftbetrieb die wenigstens eine Außenansaugöffnung 6 zumindest teilweise abdeckt. Hierbei gibt die Umschaltklappe 8 die jeweils andere Ansaugöffnung, also die Innenansaugöffnung 7 oder die Außenansaugöffnung 6, frei. Beim Umschalten des Gebläses 4 wird hierbei die Umschaltklappe 8 in die jeweilige Position bewegt. Dadurch kann das Umschalten besonders einfach durch ein Umschaltorgan, nämlich der Umschaltklappe 8, erfolgen, wodurch nicht gesonderte Absperrorgane für die Außenansaugöffnung 6 und die Innenansaugöffnung 7 notwendig sind.

Besonders bevorzugt kann vorgesehen sein, dass die Außenansaugöffnung 6 in einer ersten Deckfläche 9 der Ansaugkammer 5 ausbildet ist, dass die wenigstens eine Innenansaugöffnung 7 in wenigstes einer, an der ersten Deckfläche 9 angrenzenden Seitenfläche 10 ausgebildet ist, und dass die wenigstens eine Umschaltklappe 8 um eine zwischen der ersten Deckfläche 9 und der wenigstens einen Seitenfläche 10 angrenzenden Kante 11 schwenkbar gelagert ist. Dadurch kann ein besonders einfacher Aufbau der Ansaugkammer 5 erreicht werden.

Die Ansaugkammer 5 kann besonders bevorzugt im Wesentlichen eine zylinderförmige Außenkontur aufweisen, wobei die Zylinderform eine polygonale Grundlinie aufweist. Die Ansaugkammer 5 kann insbesondere quaderförmig ausgebildet sein, und besonders bevorzugt als quadratische Platte bzw. quaderförmiger Körper.

Gemäß der besonders bevorzugten Ausführung der gegenständlichen Erfindung ist vorgesehen, dass die Ansaugkammer 5 als baulich abgeschossene Einheit ausgebildet ist, welche wenigstens die zum Betrieb erforderlichen Umschaltklappen 8 aufweist. Die Ansaugkammer 5 weist dabei die Form einer Box auf, an welcher die Umschaltklappen 8 angeordnet bzw. gelagert sind. Dadurch ergibt sich der Vorteil, dass ein bestehendes Gebläse mittels der Ansaugkammer 5 einfach in ein umschaltbares Gebläse aufgerüstet werden kann, wobei die Umbauarbeiten an bereits bestehenden und herkömmlich ausgebildeten Trocknungsvorrichtungen gering gehalten werden können.

Insbesondere kann vorgesehen sein, dass ein Ventilator 12 des Gebläses 4 im Bereich einer, der ersten Deckfläche 9 gegenüberliegenden zweiten Deckfläche 13 angeordnet ist. Die zweite Deckfläche 13 gehört ebenfalls der Ansaugkammer 5 an. Dadurch kann bei Durchluftbetrieb der zusätzliche Strömungswiderstand durch die Ansaugkammer 5 im Vergleich zu einem Gebläse 4 ohne Ansaugkammer 5 gering gehalten werden. Weiters kann dadurch die Welle 20 für den Ventilator 12 einfach durch die Außenansaugöffnung 6 geführt werden, ohne das aufwendige Umlenkungen oder Getriebe notwendig sind.

Weiters kann vorgesehen sein, dass in der ersten Deckfläche 9 eine Halterung für den Ventilator angeordnet ist. Die Halterung kann insbesondere ein Steg sein, welcher die Welle 20 und/oder den Motor 21 lagert.

Weiters kann vorgesehen sein, dass die Leitbleche 22 im Wesentlichen in der Ebene der zweiten Deckfläche 9 angeordnet sind.

Besonders bevorzugt kann vorgesehen sein, dass im Wesentlichen die gesamte erste Deckfläche 9 als Außenansaugöffnung 6 ausgebildet ist. Hierbei kann insbesondere die gesamte erste Deckfläche 9 als von einem Rahmen umrahmte Öffnung ausgebildet sein. Hierbei kann die Ansaugkammer 5 einfach ausgebildet sein, wobei der Strömungswiderstand durch die Außenansaugöffnung 6 beim Durchluftbetrieb gering gehalten werden kann.

Weiters kann vorgesehen sein, dass im Wesentlichen die gesamte Seitenfläche 10 als Innenansaugöffnung 7 ausgebildet ist. Die gesamte Seitenfläche 10 bezeichnet hierbei die gesamte einzelne Seitenfläche 10 der Ansaugkammer. Hierbei kann ebenfalls die eine gesamte Seitenfläche 10 als Öffnung ausgebildet sein, welche von einem Rahmen umrahmt ist.

Insbesondere kann vorgesehen sein, dass pro Seitenfläche 10 jeweils eine Umschaltklappe 8 vorgesehen ist.

Weiters kann vorgesehen sein, dass die Umschaltklappe 8 im Wesentlichen so groß ist wie die jeweilige Seitenfläche 10.

Insbesondere kann vorgesehen sein, dass alle Seitenflächen 10 als Innenansaugöffnung 7 ausgebildet sind. Hierbei können die einzelnen Umschaltklappen 8 so groß sein, wie die jeweilige Seitenfläche 10. Dadurch kann der zusätzliche Strömungswiderstand beim Umluftbetrieb gering gehalten werden.

Die Umschaltklappen 8 können sich im Umluftbetrieb in der ersten Deckfläche 9 auch bereichsweise überlappen.

Insbesondere kann vorgesehen sein, dass die Ansaugkammer 5 einen quaderförmigen Rahmen aufweist, wobei vier Umschaltklappen 8 um jeweils eine der vier an der ersten Deckfläche 9 angrenzenden Kanten 11 schwenkbar angeordnet sind.

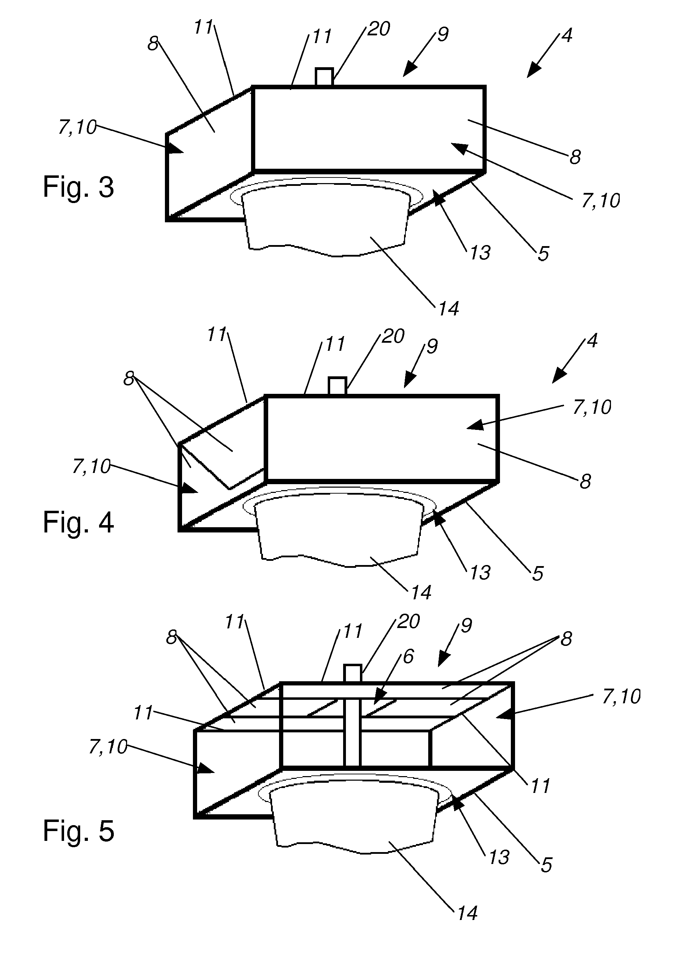

Die Umschaltklappen 8 können insbesondere im Durchluftbetrieb in der jeweiligen Seitenfläche 10 angeordnet sein um die Innenansaugöffnungen 7 abzudecken. In der Fig. 3 sind die Umschaltklappen 8 derart angeordnet, wobei die hier verdeckt dargestellte erste Deckfläche 9 komplett offen ist.

Zum Umschalten können dann die Umschaltklappen 8 aus der jeweiligen Seitenfläche 10 in die erste Deckfläche 9 geschwenkt werden.

Bei vielen Seitenflächen 10 mit Umschaltklappen 8 kann dies, ähnlich wie bei einer Faltschachtel, dadurch erfolgen, dass nacheinander Umschaltklappen 8 von aneinander nicht angrenzenden Seitenflächen 10 umgeklappt werden. In Fig. 4 ist ein Zustand dargestellt, bei welchen nur ein Teil der Umschaltklappen 8 umgeklappt werden. Nach dem Umklappvorgang sind die Umschaltklappen 8 in der ersten Deckfläche 9 angeordnet um dann die Außenansaugöffnung 6 abzudecken. Dies ist in Fig. 5 dargestellt.

Weiters kann vorgesehen sein, dass eine erste Gruppe an Umschaltklappen 8 nach innen umgeklappt werden, um die Außenansaugöffnung 6 abzudecken. Hierbei kann eine zweite Gruppe an Umschaltklappen 8 nach außen umgeklappt werden. Dies hat den Vorteil, dass sämtliche Umschaltklappen 8 in einem Schritt umgeklappt werden. Hierbei kann vorgesehen sein, dass die erste Gruppe an Umschaltklappen 8 ausreichend ist die Außenansaugöffnung 6 abzudecken. Weiters sind die Umschaltlappen 8 im Umluftbetrieb dabei nicht überlappend angeordnet.

Bevorzugt kann vorgesehen sein, dass der Ventilator 12 eine Drehachse und einen Durchmesser aufweist, und dass eine Erstreckung der Ansaugkammer 5 parallel zu der Drehachse kleiner ist als der Durchmesser des Ventilators 12. Durch dieses Verhältnis kann erreicht werden, dass in der Mitte der Deckfläche 9 ein Bereich durch die Umschaltklappen 8 nicht abgedeckt wird, wodurch die Welle 20 des Ventilators 12 einfach durch die Ansaugkammer 5 geführt werden kann.

## Patentansprüche

1. Trocknungsvorrichtung (1) zum Trocknen von Trocknungsgut (2) umfassend einen Trocknungsraum (3) zur Aufnahme des Trocknungsgutes (2) und wenigstens ein Gebläse (4) zum Erzeugen eines Luftstromes durch das Trocknungsgut (2), **dadurch gekennzeichnet, dass** das Gebläse (4) zwischen einem Durchluftbetrieb, in welchem das Gebläse (4) die Luft zu mindestens 75% des Gebläsedurchsatzes von außerhalb des Trocknungsraumes (3) ansaugt, und einem Umluftbetrieb, in welchem das Gebläse (4) die Luft zu mindestens 75% des Gebläsedurchsatzes aus dem Trocknungsraum (3) ansaugt, umschaltbar ist.

2. Trocknungsvorrichtung (1) nach Anspruch 1, **dadurch gekennzeichnet, dass** das Gebläse (4) eine Ansaugkammer (5) mit wenigstens einer außerhalb des Trocknungsraumes (3) führenden Außenansaugöffnung (6) und wenigstens einer in den Trocknungsraum (3) führenden Innenansaugöffnung (7) aufweist.

3. Trocknungsvorrichtung (1) nach Anspruch 2, **dadurch gekennzeichnet, dass** das Gebläse (4) wenigstens eine Umschaltklappe (8) aufweist, dass die wenigstens eine Umschaltklappe (8) in dem Durchluftbetrieb die wenigstens eine Innenansaugöffnung (7) zumindest teilweise blockiert, und dass die wenigstens eine Umschaltklappe (8) in dem Umluftbetrieb die wenigstens eine Außenansaugöffnung (6) zumindest teilweise blockiert.

4. Trocknungsvorrichtung (1) nach Anspruch 2 und 3, **dadurch gekennzeichnet, dass** die Außenansaugöffnung (6) in einer ersten Deckfläche (9) der Ansaugkammer (5) ausbildet ist, dass die wenigstens eine Innenansaugöffnung (7) in wenigstes einer, an der ersten Deckfläche (9) angrenzenden Seitenfläche (10) ausgebildet ist, und dass die wenigstens eine Umschaltklappe (8) um eine Kante (11) schwenkbar gelagert ist, welche Kante (11) zwischen der ersten Deckfläche (9) und der wenigstens einen angrenzenden Seitenfläche (10) ausgebildet ist.

5. Trocknungsvorrichtung (1) nach Anspruch 4, **dadurch gekennzeichnet, dass** ein Ventilator (12) des Gebläses (4) im Bereich einer, der ersten Deckfläche (9) gegenüberliegenden zweiten Deckfläche (13) angeordnet ist.

6. Trocknungsvorrichtung (1) nach Anspruch 4 oder 5, **dadurch gekennzeichnet, dass** im Wesentlichen die gesamte erste Deckfläche (9) als Außenansaugöffnung (6) ausgebildet ist.

7. Trocknungsvorrichtung (1) nach einem der Ansprüche 4 bis 6, **dadurch gekennzeichnet, dass** im Wesentlichen die gesamte Seitenfläche (10) als Innenansaugöffnung (7) ausgebildet ist.

8. Trocknungsvorrichtung (1) nach einem der Ansprüche 4 bis 7, **dadurch gekennzeichnet, dass** alle Seitenflächen (10) als Innenansaugöffnung (7) ausgebildet sind.

9. Trocknungsvorrichtung (1) nach einem der Ansprüche 2 bis 8, **dadurch gekennzeichnet, dass** das Gebläse (4) eine an der Ansaugkammer (5) angrenzende Luftverteileinrichtung (14) mit wenigstens einem Luftschlitz (18) aufweist.

10. Trocknungsvorrichtung (1) nach einem der Ansprüche 1 bis 9, **dadurch gekennzeichnet, dass** der Trocknungsraum (3) wenigstens eine, durch ein Ausblasabsperrorgan (16) verschließbare, Ausblasöffnung (17) aufweist.

11. Verfahren zum Trocknen eines Trocknungsgutes (2) in einem Trocknungsraum (3) einer Trocknungsvorrichtung (1), insbesondere einer Trocknungsvorrichtung nach einem der Ansprüche 1 bis 10, wobei das Trocknungsgut (2) mittels eines durch ein Gebläse (4) erzeugten Luftstromes getrocknet wird, wobei in einem Durchlufttrocknungschritt die durch das Gebläse (4) strömende Luft zu mindestens 75% von außerhalb des Trocknungsraumes (3) angesaugt wird, wobei nach dem Durchlufttrocknungschritt in einem Umlufttrocknungsschritt die durch das Gebläse (4) strömende Luft zu mindestens 75% aus dem Trocknungsraum (3) angesaugt wird.

12. Verfahren nach Anspruch 11, **dadurch gekennzeichnet, dass** in dem Umlufttrocknungsschritt dem Trocknungsraum (3) eine zusätzliche Exergie von außerhalb des Trocknungsraumes (3) zugeführt wird.

13. Verfahren nach Anspruch 11 oder 12, **dadurch gekennzeichnet, dass** die durch das Gebläse (4) strömende Luft im Durchlufttrocknungschritt eine Temperatur im Bereich einer Umgebungslufttemperatur, insbesondere zwischen 10°C und 40°C, aufweist.

14. Verfahren nach einem der Ansprüche 11 bis 13, **dadurch gekennzeichnet, dass** die durch das Gebläse (4) strömende Luft im Umlufttrocknungsschritt eine Temperatur von höher als eine Umgebungslufttemperatur, insbesondere bis zu 120°C, aufweist.

15. Verfahren nach einem der Ansprüche 11 bis 14, **dadurch gekennzeichnet, dass** ein Volumenstrom der von außerhalb des Trocknungsraumes (3) angesaugten Luft in dem Durchlufttrocknungschritt mindestens drei mal, insbesondere mindestens fünfzehn mal, so hoch ist wie im Umlufttrocknungsschritt.
